# DEMANDE DE BREVET EUROPEEN

(11) **EP 0 607 086 A1**
(43) Date de publication de la demande: **20.07.1994**
(21) Numéro de dépôt: 94400072.8
(22) Date de dépôt: 12.01.1994
(51) Int. Cl.: F16K 5/04, F16K 27/06

(54) **Robinet tournant à commande manuelle**

(30) Priorité: 13.01.1993 FR 9300225
(71) Demandeur: ELECTRICITE DE FRANCE, F-75008 Paris (FR)
(72) Inventeur: Regnier, Jean-Claude, F-89140 Vinneus (FR)
(74) Mandataire: Martin, Jean-Jacques

(57) **Abrégé**

Le robinet tournant à commande manuelle comporte un corps creux (1), un boisseau (2) monté dans ce corps creux (1), des tubulures d'admission et d'évacuation (5) débouchant dans la chambre intérieure du corps creux (1), un volant de manoeuvre (3) du boisseau (2). Le boisseau (2) présente à sa périphérie une gorge (8) et le corps creux (1) est traversé par deux logements (6) qui débouchent en leur partie médiane dans ladite gorge (8) du boisseau (2), ces logements recevant chacun des goupilles (9) servant au maintien axial du boisseau (2) par rapport au corps (1).

## Description

La présente invention est relative à un robinet tournant à commande manuelle, ainsi qu'à l'utilisation d'un tel robinet tournant pour commander des circuits transportant des fluides corrosifs.

Pour éviter des problèmes de corrosion généralisée, certaines tuyauteries, par exemple d'installations agro-alimentaires ou encore de circuits auxiliaires de centrales nucléaires, sont constituées en des matériaux plastiques ou en des matériaux composites.

Dans les conditions habituelles de température et de pression de fonctionnement de tels circuits (110°C, 25 bars pour les circuits de centrales nucléaires), les robinets actuellement utilisés sont des robinets de conception classique en matériau métallique.

Ces robinets sont par nature sujets à corrosion.

En outre, ils sont trop lourds pour pouvoir être directement supportés par les tuyauteries en matériaux plastiques ou composites et il est nécessaire de prévoir des structures de maintien particulières pour ces robinets.

Egalement, la jonction hétérogène entre la tuyauterie en plastique ou composite et le robinet en métal n'est pas sans poser de difficultés de réalisation.

Pour pallier les problèmes de corrosion, certains matériels de robinetterie sont revêtus de peinture ou de résine. Ces revêtements s'avèrent néanmoins totalement insuffisants.

Il a aussi été proposé un robinet dont le boisseau est sphérique et est en polychlorure de vinyle. Cependant, ce boisseau est renforcé par des inserts métalliques. Il est donc également vulnérable à la corrosion.

Un but principal de l'invention est de proposer un robinet permettant de pallier ces inconvénients. En particulier, le robinet proposé par l'invention est d'une structure telle qu'il peut être réalisé uniquement en matériaux plastiques et/ou composites.

La présente invention a donc pour objet un robinet tournant à commande manuelle comportant un corps creux qui définit une chambre cylindrique, un boisseau tournant cylindrique monté coaxialement dans cette chambre, une tubulure d'admission et une tubulure d'évacuation qui débouchent chacune dans cette chambre par une ouverture, le boisseau étant traversé par un passage de fluide qui débouche dudit boisseau dans la chambre par deux ouvertures, un volant de manoeuvre solidaire du boisseau permettant à un opérateur de tourner le boisseau sur lui-même d'une position ouverte où les deux ouvertures du passage de fluide du boisseau se trouvent en regard des ouvertures des tubulures, à une position fermée, où les ouvertures du passage de fluide ne sont pas en regard des ouvertures des tubulures, et réciproquement, des joints d'étanchéité entourant respectivement l'une et l'autre des ouvertures des tubulures lorsque le boisseau est en position fermée, et des moyens assurant le maintien axial du boisseau dans la chambre, caractérisé en ce que le corps creux est constitué en une matière composite à enroulements filamentaires, en ce que lesdits joints d'étanchéité sont reçus dans des rainures ménagées sur le boisseau , les tranches des extrémités d'ouverture des tubulures se confondant avec la surface interne de la chambre, cette surface étant recouverte par une couche de résine d'étanchéité en contact avec lesdits joints d'étanchéité, cette couche de résine d'étanchéité recouvrant également lesdites tranches.

D'autres caractéristiques et avantages ressortiront encore de la description qui suit de l'invention. Cette description est purement illustrative et non limitative. Elle doit être lue en regard des dessins annexés sur lesquels :
- la figure 1 est une vue en coupe axiale d'un robinet conforme à un mode de réalisation particulier de l'invention ;
- la figure 2 est une vue en coupe selon la ligne II-II du corps du robinet représenté sur la figure 1 ;
- la figure 3 est une vue de côté du boisseau du robinet de la figure 1 ;
- la figure 4 est une vue en coupe selon la ligne IV-IV de la figure 3.

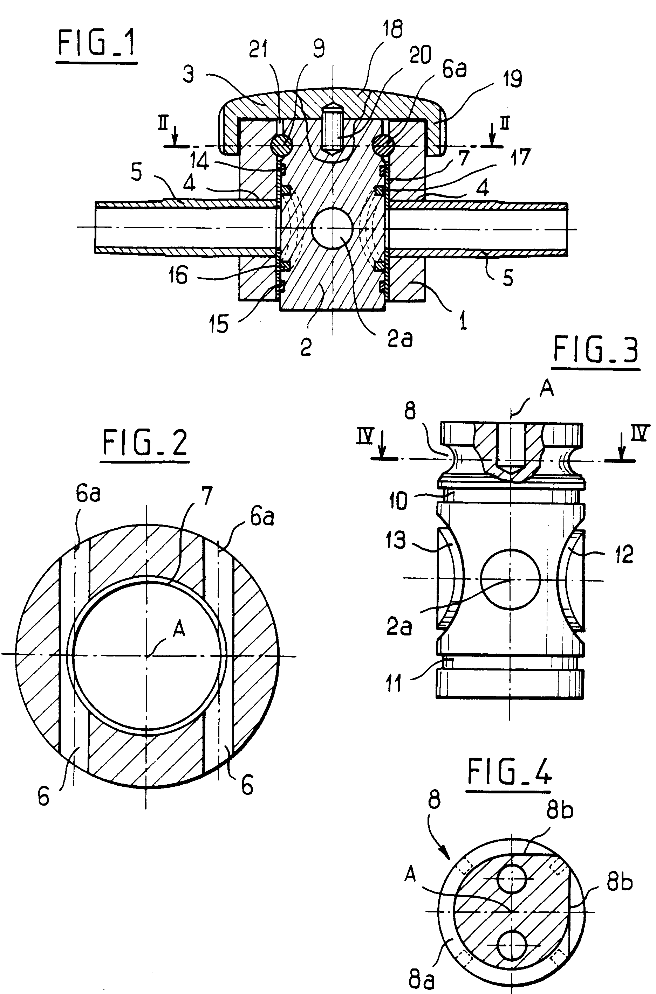

Le robinet représenté sur la figure 1 comporte principalement un corps 1 qui est un manchon cylindrique, un boisseau 2 cylindrique reçu coaxialement dans ce corps 1 et un volant de manoeuvre 3 solidarisé du boisseau 2 à une de ses extrémités axiales et permettant à un opérateur de faire manuellement pivoter le boisseau 2 dans le corps 1. L'axe commun au boisseau 2 et au manchon 1 a été référencé par A.

Le corps 1 est ouvert à chacune de ses extrémités. Il est constitué par un enroulement filamentaire de fibres de verre noyées dans une résine époxyde.

En sa partie médiane, la paroi de ce corps 1 est traversée par deux orifices 4 diamétralement opposés qui reçoivent des tubulures 5 d'admission et d'évacuation du fluide. Chaque tubulure 5 est également constituée en un matériau composite à enroulement filamentaire de fibres de verre noyées dans une résine époxyde. Le diamètre extérieur de ces tubulures 5 en leur extrémité qui se trouve dans un orifice 4 correspondant du manchon est légèrement inférieur au diamètre intérieur de cet orifice 4. Ces tubulures et les parois intérieures de cet orifice 4 dans lesquels elles sont disposées sont collés.

Ainsi qu'on peut particulièrement le voir sur la figure 2, le corps 1 est traversé vers son extrémité la plus proche du volant de manoeuvre 3 par deux orifices cylindriques 6. Ces deux orifices 6 s'étendent selon des axes 6a parallèles et diamètralement opposés l'un à l'autre par rapport à l'axe A. Ces axes 6a sont tangents au cylindre délimitant principalement le boisseau 2 (Figure 1).

La surface intérieure du corps 1 est revêtue par une couche cylindrique 7 de faible épaisseur de résine époxyde chargée ("incoat"). Ainsi qu'on peut plus particulièrement le voir sur la figure 1, cette couche 7 s'étend dans la hauteur du corps 1 par rapport à son axe A, d'une périphérie dudit corps juste en dessous des évidements 6 jusqu'à l'extrémité du corps 1 opposée au volant 3.

Le boisseau 2 est un cylindre massif en polyuréthane usiné. Il est traversé par un passage de fluide 2a cylindrique s'étendant selon un axe perpendiculaire à l'axe principal du boisseau 2. Ce passage 2a a même diamètre intérieur que les tubulures 5.

Comme on peut le voir plus particulièrement sur les figures 1,3 et 4, les usinages ménagés sur ce boisseau 2 comprennent plus particulièrement une gorge 8 ainsi que quatre rainures référencées de 10 à 13.

La gorge 8 a une section demi-sphérique et comprend une portion principale 8a qui entoure le boisseau 2 sur environ 270° de la périphérie de celui-ci qui est, dans le même plan que les axes 6a.Cette portion 8a en arc de cercle se prolonge à chacune de ses extrémités par une portion de gorge droite 8b. Les deux portions de gorges droites 8b s'étendent en angle droit l'une par rapport à l'autre.

La section droite demi-sphérique de la gorge 8 a un rayon qui correspond au rayon des logements 6.Ainsi que cela a été représenté sur la figure 1, ces logements 6 et la gorge 8 reçoivent des goupilles cylindriques 9 qui s'étendent tangentiellement par leur partie médiane dans la gorge 8 et maintiennent par coopération avec les parois intérieures de la gorge 8 et des évidements 6, le boisseau 2 par rapport au corps 1, de façon que ce boisseau 2 ne se désemboîte pas axialement de ce corps 1.

Les rainures 10 à 13 reçoivent des joints d'étanchéité référencées de 14 à 17.

La rainure 10 est une gorge annulaire qui entoure le boisseau 2 en une périphérie circulaire de celui-ci située dans la hauteur axiale du boisseau 2 juste sous la gorge 8, entre ladite gorge 8 et l'extrémité du boisseau 2 opposée au volant 3.

Vers l'extrémité opposée au volant 3 du boisseau 2 est ménagée la rainure 11 qui est également annulaire et est similaire à la rainure 10. Ces deux rainures 10 et 11 reçoivent les joints d'étanchéité annulaires externe référencés par 14 et 15.

Les rainures 12 et 13 sont quant à elles destinées à recevoir des joints d'étanchéité interne 16 et 17. Les rainures 12 et 13 sont ménagées sur le boisseau chacune selon un contour annulaire fermé s'étendant entre les rainures 10 et 11 en entourant les portions de surfaces pleines dudit boisseau 2 qui sont opposées par rapport à l'axe A aux portions droites 8b de la gorge 8 et qui sont en regard des ouvertures des tubulures lorsque le boisseau est en position fermée. Ainsi que cela a été représenté sur la figure 1, lorsque le boisseau 2 est par rapport au corps 1 dans une position fermée, les joints 16 et 17 entourent les ouvertures des tubulures 5.

Les différents joints 14 à 17 sont chacun constitués, d'une part, d'un joint torique en élastomère logé en fond de gorge, et qui assure la restitution élastique et l'étanchéité fond de gorge et, d'autre part, d'un joint en EPDM appliqué sur ce joint torique en élastomère, ce deuxième joint assurant l'étanchéité entre le boisseau 2 et le corps 1, en s'appliquant sur la couche 7 de résine qui entoure la paroi intérieure dudit corps 1.

Le volant 3 est un chapeau constitué par, d'une part, un fond 18 qui recouvre les surfaces plates d'extrémités du corps 1 et du boisseau 2 vers lesquelles sont situées les goupilles 9, et, d'autre part, une jupe cylindrique 19 qui s'étend dudit fond 18 pour entourer annulairement la paroi extérieure du corps 1. Cette jupe 19 est d'une hauteur telle qu'elle recouvre les ouvertures des logements 6, de sorte qu'une fois le volant de manoeuvre 3 monté, les goupilles 9 sont emprisonnées dans les logements 6.

Des évidements borgnes sont ménagés sur le fond du chapeau 3 et sur le boisseau 2 pour recevoir des clavettes 20 collées sur les parois des évidements et qui maintiennent le volant 3 par rapport au corps 1 et au boisseau 2. Ces clavettes 20 sont réalisées en fibres de verre.

La surface extérieure de la jupe 19 est cannelée pour faciliter le maniement du volant 3.

Le montage de ce robinet s'effectue de la façon qui va maintenant être décrite.

Le corps 1 et les tubulures 5 sont réalisés de façon indépendante du boisseau 2. Les tubulures 5 sont collées dans les orifices 4 du corps 1 qui les reçoivent. Ces tubulures 5 sont disposées et conformées à leurs extrémités d'ouverture de façon que leurs bords d'extrémité soient dans le prolongement exact de la paroi intérieure du corps 1. Une fois les tubulures 5 positionnés par rapport audit corps, l'on revêt la paroi intérieure du corps 1 formant manchon de la couche cylindrique 7 de résine ; cette couche est déposée jusqu'aux bords annulaires d'extrémité d'ouverture des tubulures 5.

La préparation du boisseau 2 se fait par usinage. On monte les joints d'étanchéité 14, 17 sur le boisseau 2 avant de l'introduire dans le corps 1. L'opération d'introduction n'intervient que lorsque la couche 7 résine chargée est sèche. Le boisseau 2 est introduit dans le corps 1 par l'ouverture d'extrémité de celui-ci vers laquelle sont ménagés les logements 6. Un espacement annulaire 21 de quelques dixièmes de millimètres est prévu à cette extrémité pour recevoir un outil de guidage (non représenté) pour le boisseau 2. Cet outil de guidage permet d'éviter que les joints ne soient arrachés lors de la mise en place du boisseau. Une fois le boisseau 2 en place, les goupilles 9 sont introduites dans les logements 6 et la gorge 8. Puis le chapeau 13 est positionné pour capoter le corps 1 et le boisseau 2.

Pour faire fonctionner ce robinet, l'utilisateur manoeuvre le boisseau 2 par le volant3 entre une position ouverte où l'une des goupilles 9 est en butée sur l'une des portions droites 8b de la gorge 8 et où les ouvertures du passage 2a coïncident avec celles des tubulures 5, et une position fermée où le boisseau 2 est pivoté d'un quart de tour par rapport à la position ouverte et où les ouvertures des tubulures 5 sont en regard des surfaces pleines du boisseau 2 entourées par les joints 16 et 17, l'autre des goupilles 9 étant en butée sur l'autre des portions droites 8b.

En cours d'utilisation, le corps 1 est peu sollicité, de sorte qu'il n'est pas nécessaire de le changer. En particulier, on aura noté que la zone de la paroi interne de ce corps 1 qui se trouve éventuellement exposée aux fluides (zone entre les joints externes 14 et 15) n'est aucunement usinée : les rainures dans lesquelles sont logées les joints d'étanchéité sont ménagées sur le boisseau ; les logements des goupilles sont ménagés au-delà de la zone des joints. Ceci évite que le matériau filamentaire dans lequel est constitué ce corps 1 ne se défibre. En outre, ce matériau filamentaire est protégé avec la couche de collage entre les orifices 4 et les tubulures 5 par la couche de résine 7 qui recouvre la paroi interne du corps 1 et les bords d'extrémité des tubulures 5.

Si l'on veut par contre changer le boisseau 2 interne, l'on peut séparer le volant de manoeuvre 3 du boisseau 2 en perçant le fond 18 de ce volant 3 au niveau des clavettes 20. Une fois le volant 3 séparé du corps 1 et du boisseau 2, l'on retire les goupilles 9 de leurs logements 6. Le boisseau 2 est alors libre de coulisser axialement dans le corps 1 pour en sortir.

Un tel robinet présente de nombreux avantages.

Il est constitué par un nombre de pièces réduit. Il ne présente pas de zones de rétention, de sorte que des fluides chargés peuvent y circuler sans s'y déposer.

Un simple choix des matériaux qui constitue ces pièces permet de l'adapter aux contraintes d'utilisation du fluide qui y circulent, (nature du fluide, agressivité chimique ou mécanique, etc.).

Son installation est simple. En particulier, ce robinet est d'un faible poids, de sorte qu'aucun moyen de support particulier n'est à prévoir.

Egalement encore, ce robinet est d'une maintenance aisée. Sa structure permet par simple désemboîtement le changement du boisseau.

## Revendications

1. Robinet tournant à commande manuelle comportant un corps creux (1) qui définit une chambre cylindrique, un boisseau (2) tournant cylindrique monté coaxialement dans cette chambre, une tubulure d'admission et une tubulure d'évacuation (5) qui débouchent chacune dans cette chambre par une ouverture, le boisseau (2) étant traversé par un passage (2a) de fluide qui débouche dudit boisseau (2) dans la chambre par deux ouvertures, un volant de manoeuvre (3) solidaire du boisseau permettant à un opérateur de tourner le boisseau (2) sur lui-même d'une position ouverte où les deux ouvertures du passage de fluide (2a) du boisseau (2) se trouvent en regard des ouvertures des tubulures (5), à une position fermée, où les ouvertures du passage de fluide (2a) ne sont pas en regard des ouvertures des tubulures (5), et réciproquement, des joints d'étanchéité (16, 17) entourant respectivement l'une et l'autre des ouvertures des tubulures (5) lorsque le boisseau (2) est en position fermée, et des moyens (6, 8, 9) assurant le maintien axial du boisseau (2) dans la chambre, caractérisé en ce que le corps creux est constitué en une matière composite à enroulements filamentaires, en ce que lesdits joints d'étanchéité (16, 17) sont reçus dans des rainures ménagées sur le boisseau (2), les tranches des extrémités d'ouverture des tubulures (5) se confondant avec la surface interne de la chambre, cette surface étant recouverte par une couche de résine d'étanchéité (7) en contact avec lesdits joints d'étanchéité, cette couche de résine d'étanchéité recouvrant également lesdites tranches.

2. Robinet selon la revendication 1, caractérisé en ce que le boisseau (2) présente à sa périphérie une gorge (8) qui l'entoure au moins partiellement au-delà des emplacements desdits joints d'étanchéité (16, 17), et en ce que le corps creux (1) est traversé par deux logements (6) qui s'étendent selon deux axes parallèles (6a) diamétralement opposés par rapport à l'axe (A) de la chambre et orthogonaux à cet axe, ces logements (6) étant disposés de façon à déboucher en leur partie médiane dans ladite gorge (8) du boisseau (2) et recevant chacun une goupille (9) servant au maintien axial du boisseau dans la chambre, ces goupilles (9) s'étendant par leur partie médiane dans la gorge tangentiellement au fond de celle-ci.

3. Robinet selon l'une quelconque des revendications précédentes, caractérisé en ce que deux joints d'étanchéité externe (14, 15) entourent le boisseau (2) en des périphéries de celui-ci situées respectivement de part et d'autre des ouvertures du passage de fluide par rapport à la hauteur axiale dudit boisseau (2), ces deux joints (14, 15) étant reçus dans des rainures (10, 11) ménagées sur le boisseau (2).

4. Robinet selon l'une quelconque des revendications précédentes, caractérisé en ce que le corps creux (1) est constitué en fibres de verre et résine époxy.

5. Robinet selon l'une quelconque des revendications précédentes, caractérisé en ce que les logements (6) des goupilles (9) débouchent à l'extérieur du corps (1), le volant de manoeuvre (3) comportant, d'une part, un fond (18) qui recouvre le corps (1) et le boisseau (2) à l'une de leurs extrémités et, d'autre part, une jupe (19) s'étendant cylindriquement à partir dudit fond (18), cette jupe (19) recouvrant les ouvertures par lesquelles les logements (6) débouchent dudit corps (1).

6. Robinet selon la revendication 5, caractérisé en ce que le volant de manoeuvre (3) est solidarisé du boisseau (2) par des clavettes (20) qui s'étendent chacune en partie dans un logement ménagé dans le boisseau (2) et en partie dans un logement ménagé sur le fond (18) du volant (3), les clavettes (20) étant collées aux parois intérieures de ces logements.

7. Robinet selon l'une quelconque des revendications précédentes, caractérisé en ce qu'un espacement annulaire cylindrique (21) est ménagé entre le boisseau (2) et la paroi intérieure du corps (1) à l'extrémité ouverte dudit corps par laquelle le boisseau est introduit dans ledit corps, cet espacement annulaire recevant, lors du montage, un outil pour le guidage du boisseau dans le corps.

8. Robinet selon l'une quelconque des revendications précédentes, caractérisé en ce que deux butées (8b) de fin de course en angle droit sont ménagées dans le prolongement de la gorge (8) du boisseau (2) recevant les goupilles (9), l'une et l'autre de ces goupilles (9) venant respectivement en appui sur l'une et l'autre de ces butées (8b) en positions respectivement ouverte et fermée du boisseau (2) par rapport au corps (1).

9. Utilisation du robinet selon l'une quelconque des revendications précédentes pour commander l'ouverture ou la fermeture d'un circuit de fluide corrosif.
